# EUROPEAN PATENT APPLICATION

(11) **EP 1 743 834 A1**
(43) Date of publication of application: **17.01.2007**
(21) Application number: 06014261.9
(22) Date of filing: 10.07.2006
(51) Int. Cl.: B62M 23/02

(54) **Electric bicycle**

(30) Priority: 11.07.2005 JP 2005201483
(71) Applicant: YAMAHA HATSUDOKI KABUSHIKI KAISHA, Iwata-shi, Shizuoka-ken 438-8501 (JP)
(72) Inventor: Okamoto, Ikuo Yamaha Hatsudoki Kabushiki Kaisha, Shizuoka-ken 438-8501 (JP); Hirata, Toshiki Yamaha Hatsudoki Kabushiki Kaisha, Shizuoka-ken 438-8501 (JP); Xiao, Hu Ming c/o WUXI KAWAMURA BICYCLE Co. Ltd., City Jiangsu (CN)
(74) Representative: Grünecker, Kinkeldey, Stockmair & Schwanhäusser Anwaltssozietät

(57) **Abstract**

The present invention relates to an electric bicycle comprising an electric motor for inputting drive force into a wheel, a battery for supplying electric power to the electric motor, and a pedal crank section for inputting a drive force having a pedal crankshaft, and a crankshaft supporting unit, which directly supports a battery bottom receiving section holding the battery.

## Description

The present invention relates to an electric bicycle having a pedal crank section for inputting drive force and an electric motor for generating drive force.

Conventionally, an electric bicycle is used, which having a pedal crank section for a rider to input drive force and an electric motor for generating drive force other than the drive force that the rider inputs (for example, see JP-B-3622020). The electric bicycle incorporates a power unit having a pedal crank section, an electric motor and so forth disposed in a lower center area of the body thereof. The power unit is supported by a down tube and seat tubes using a mounting bracket made of a metal sheet. A right and left pair of chain stays extends rearward from the mounting bracket. A right and left seat stays couples rear end portions of the respective chain stays with top end portions of the respective seat tubes. A cup-like case is fastened to a top surface of the mounting bracket by screws. The cup-like case holds a bottom portion of a battery.

Because the battery mounted on such an electric bicycle is heavy in weight, it is preferably positioned adjacent to the center of gravity of the body of the bicycle. The battery of the conventional electric bicycle described above is placed above the power unit using the mounting bracket. The battery thus is positioned adjacent to the center of gravity in a fore to aft direction of the body of the bicycle. The position of the battery, however, is inevitably high because the mounting bracket is disposed between the battery and the power unit. Therefore, the center of gravity of the electric bicycle is also high. In addition, a parts count increases because of the use of the mounting bracket. Thus, it is difficult to lower the center of gravity of the entire electric bicycle. Also, it is difficult to compactly arrange components and parts of the electric bicycle.

The present invention is made for coping with the problem discussed above. An object thereof is to provide an electric bicycle which has the center of gravity placed at a lower position and has components and parts compactly arranged.

This objective is solved in an inventive manner by an electric bicycle comprising an electric motor for inputting drive force into a wheel, a battery for supplying electric power to the electric motor, and a pedal crank section for inputting a drive force having a pedal crankshaft, and a crankshaft supporting unit, which directly supports a battery bottom receiving section holding the battery.

Preferably, the battery bottom receiving section for holding a bottom portion of the battery is positioned above the crankshaft supporting unit of the pedal crank section.

Further preferably, the electric bicycle comprises the electric motor for inputting drive force into either one of a front wheel and a rear wheel, wherein the electric motor is disposed at a predetermined portion of the body of the electric bicycle spaced apart from the pedal crank section.

Still further preferably, a front end portion of a down tube is coupled with a head pipe holding a steering shaft, and a rear end portion of the down tube is coupled with the crankshaft supporting unit.

Therein, it is further beneficial, if a sprocket for driving the rear wheel through a chain is coupled with one end portion of the pedal crankshaft extending outward from a lateral side surface of the crankshaft supporting unit, a right and left pair of rear frame member extending obliquely rearward downward is coupled with the rear end portion of the down tube, and one of the pair of rear frame members bend to extend rearward so as to cover front and top circumferential surfaces of the sprocket.

Additionally, it is beneficial, if the down tube is formed with a single member placed at a center portion in a transverse direction of the body, a cross member extending generally horizontally is fixed to a rear section of the down tube so as to cross at right angles with a longitudinal axis of the down tube, and respective end portions of the pair of rear frame members are coupled with both end portions of the cross member.

According to a further embodiment, a front end portion of a rear arm for supporting the rear wheel is fixed to the crankshaft supporting unit.

According to another embodiment, a stand is pivotable about an axis of a support shaft thereof between a position at which the stand keeps the body under a standing condition and a position at which the stand extends rearward, the support shaft being attached to the crankshaft supporting unit.

According to yet another embodiment, the crankshaft supporting unit is a member, which is shaped like the letter U in its plan view and has a right and left pair of side sections and a front section for connecting the side sections to each other, and respective end portions of the pedal crankshaft are supported by the respective side sections under a condition that the respective end portions of the pedal crankshaft extend through the respective side sections.

Therein, it is beneficial, if the rear end portion of the down tube is coupled with the front section of the crankshaft supporting unit under a condition that the longitudinal axis of the down tube crosses with the front section.

Additionally, it is beneficial, if the rear arm is formed with a right and left arm sections and a connecting shaft for connecting respective front end portions of the arm sections to each other, said connecting shaft extending between the right and left pair of the side sections, and the pair of the side sections supporting the connecting shaft of the rear arm so that a rear end portion of the rear arm is swingable.

According to another preferred embodiment, the pair of the side sections of the crankshaft supporting unit pivotally holds the support shaft of the stand therebetween, which is pivotable about the axis of the support shaft thereof between the position at which the stand keeps the body under the standing condition and the position at which the stand extends rearward, so that the stand is swingable.

Therein, it is beneficial, if the support shaft of the stand is positioned below respective portions of the right and left side sections of the crankshaft supporting unit to which the connecting shaft of the rear arm extending therebetween is attached, and the support shaft of the stand extends along the connecting shaft of the rear arm above or below the connecting shaft of the rear arm.

Additionally, it is beneficial, if a resilient means is disposed for urging the stand toward the position at which the stand extends rearward, and the right and left pair of side sections has a preventing means extending therebetween to prevent the stand from further pivoting beyond the position at which the stand extends rearward.

In the following, the present invention is explained in greater detail with respect to several embodiments thereof in conjunction with the accompanying drawings, wherein:
- FIG. 1: is a side elevational view of an electric bicycle configured in accordance with the embodiment,
- FIG. 2: is a front elevational view of the electric bicycle, partially showing an upper portion thereof,
- FIG. 3: is a side elevational view of frame members of the body of the bicycle,
- FIG. 4: is a top plan view of a crankshaft supporting unit,
- FIG. 5: is a front elevational view of the crankshaft supporting unit,
- FIG. 6: is a side elevational view of the crankshaft supporting unit,
- FIG. 7: is a rear elevational view of the crankshaft supporting unit,
- FIG. 8: is a perspective view of the major part of the electric bicycle looked from an obliquely front location,
- FIG. 9: is a perspective view of the major part of the electric bicycle looked from an obliquely front location,
- FIG. 10: is a side elevational view of the electric bicycle, showing a condition under which a battery is going to be contained in a battery container,
- FIG. 11: is a side elevational view of the electric bicycle, showing a condition under which a battery is contained in a battery container,
- FIG. 12: is a bottom plan view of the major part of the electric bicycle, and
- FIG. 13: is a perspective view showing a condition under which a stand is pivoted.

### Description of Reference Numerals

10: electric bicycle
10a: body of the electric bicycle
11: front wheel
12: rear wheel
18: pedal crank section
21: head pipe
22: down tube
30: crankshaft supporting unit
31, 32: side section
31 c, 32c: support piece
33: front section
36: mounting piece
41: cross bar
42a, 42b: rear frame member
46: battery
47b: battery bottom receiving unit
53: rear arm
53a, 53b: arm section
53c: coupling shaft
55: stand
55b: support shaft
57: spring member
58: stopper
61: pedal crankshaft
62: sprocket
63: chain
65: electric motor

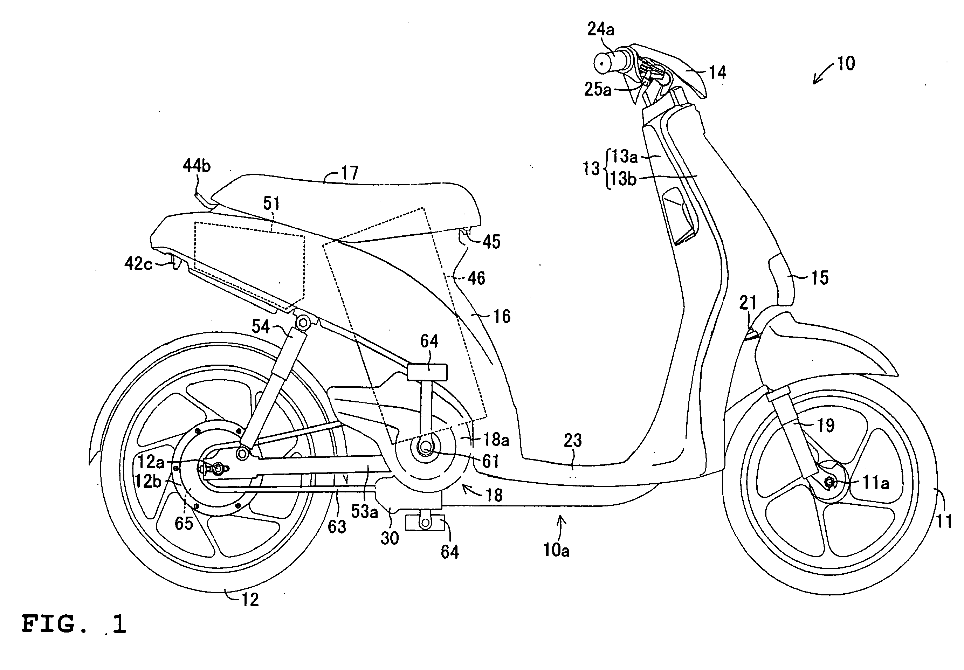

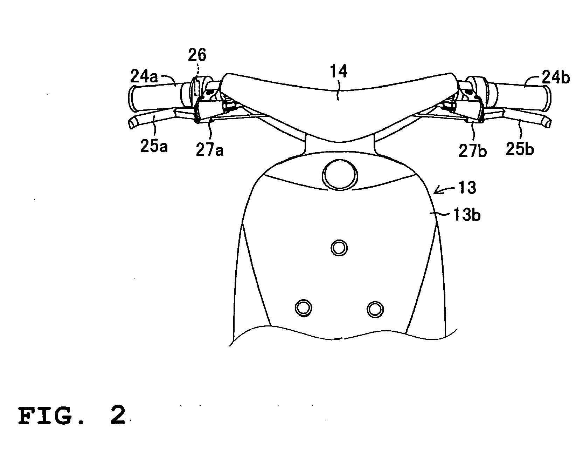

One embodiment will be described below with reference to the attached drawings. FIG. 1 shows an electric bicycle 10 configured in accordance with the embodiment. The electric bicycle 10 includes a pair of wheels which are front wheel 11 and a rear wheel 12, and a body 10a to which the pair of wheels are attached. Also, as shown in FIG. 2, handle bars 14 extend above a top of a front cover unit 13 which forms a front portion of the body 10a. A light 15 is disposed in a center, in a vertical direction and also a transverse direction, of a front surface of the front cover unit 13. A seat 17 is positioned in a top area of a rear cover unit 16 which forms a rear portion of the body 10a. A pedal crank section 18 with which the rider inputs the drive force is attached to the body 10a at a location below a front portion of the rear cover unit 16.

Lower end portions of a front fork 19 bifurcated downward is rotatable supported to the front wheel 11. That is, respective lower ends of the front fork 19 support respective lateral ends of the axle 11 a of the front wheel 11 for rotation. Thereby, the front wheel 11 can rotate about an axis of the axle 11 a. A top end portion of the front fork 19 has a head pipe 21. The head pipe 21 is coupled with a front end portion (top end portion) of a down tube 22 which forms a portion of the major part of the body 10a of the bicycle 10. The down tube 22 is positioned in the interior of a connecting cover member 23 which connects the front cover unit 13 and the rear cover unit 16.

A steering shaft (not shown) extends through the head pipe 21 for pivotal movement about its axis within the head pipe 21. A bottom end portion of the steering shaft is coupled with a center of the top end portion of the front fork 19. A top end portion of the steering shaft protrudes upward from a top end portion of the head pipe 21. The handle bars 14 are coupled with the top end portion of the head pipe 21. Thus, when the rider operates the handle bars 14 to pivot the steering shaft about the axis thereof, the front wheel 11 turns rightward or leftward in accordance with a pivotal amount of the steering shaft.

The handle bars 14 have grips 24a and 24b at respective right and left ends thereof. The grip 24a is pivotable about an axis of the handle bars 14. The grip 24a thus functions as an accelerator operator for adjusting a rotational speed of an electric motor 65, which will be described below, in addition to that a rider of the bicycle 10 can holds one end of the handle bars 14 by grasping the grip 24a with a hand. The grip 24b is fixed to another end of the handle bars 14 so that the rider can hold this end of the handle bars 14 by grasping the grip 24b by the other hand. Also, brake levers 25a and 25b are disposed adjacent to the respective grips 24a and 24b and are urged to leave from the associated grips 24a and 24b. When the brake levers 25a and 25b are pulled up to the respective grips 24a and 24b, the respective rotations of the front wheel 11 and the rear wheel 12 are stopped.

A potentiometer 26 is disposed adjacent to the grip 24a in the handle bars 14 to detect a pivotal operation amount of the grip 24a. Brake switches 27a and 27b are connected to the respective brake levers 24a and 24b to detect that respective brake levers 24a and 24b are operated. The front cover unit 13 is formed with a rear surface cover member 13a defining a rear surface and a front surface cover member 13b defining a front surface both of which are coupled with each other by screws. An internal space is defined between the rear and front surface cover members 13a and 13b. A controller which electrically controls a drive system of the electric bicycle 10, a power switch and so forth (not shown) are disposed in the space in addition to the head pipe 21, a portion of the down tube 22 and the steering shaft.

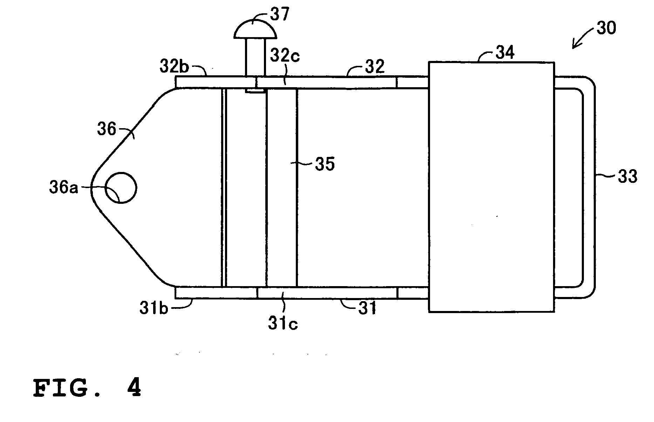

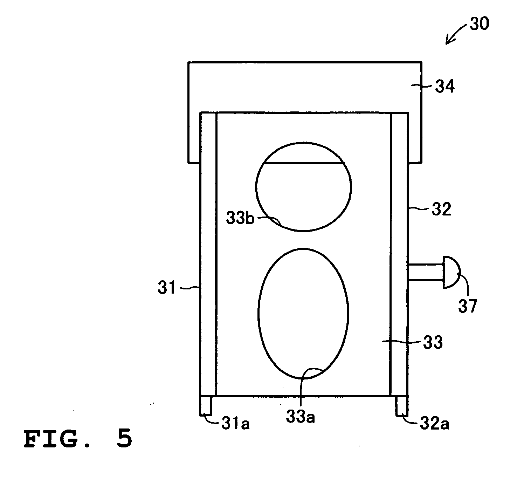

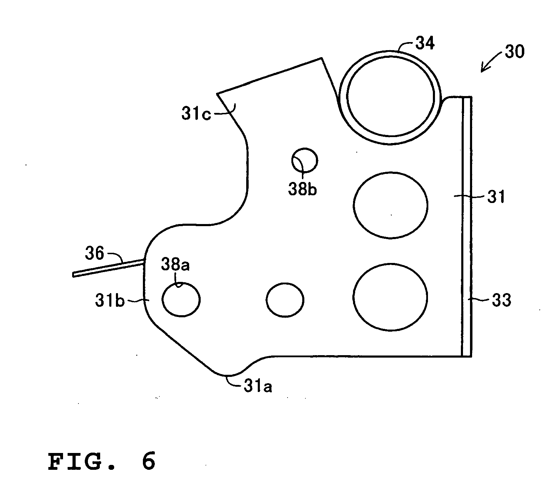

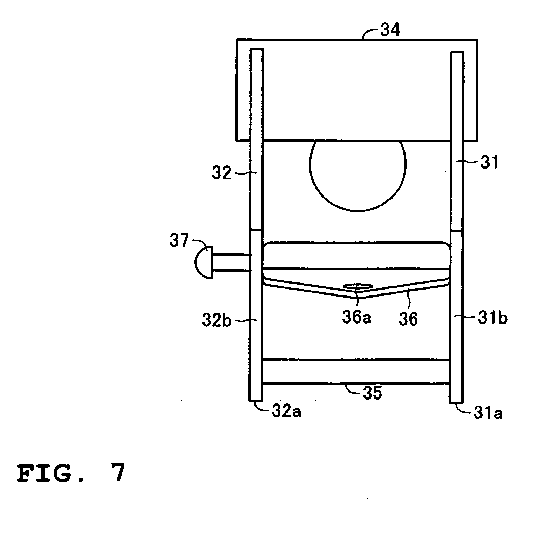

A rear portion of the down tube 22, which front end portion (top end portion) is coupled with the head pipe 21, extends obliquely rearward downward from the coupling portion with the head pipe 21 and curves to extend horizontally rearward. A crankshaft supporting unit 30 is attached to a rear end portion of the down tube 22. The crankshaft supporting unit 30 is constructed as shown in FIGs. 4 through 7. That is, the crankshaft supporting unit 30 includes a right and left pair of side sections 31 and 32 and a front section 33 connecting the respective side sections 31 and 32 to each other. The crankshaft supporting unit 30 has a cylindrical holder 34 transversely extending over a portion thereof adjacent to the front section 33. The cylindrical holder 34 supports a pedal crankshaft 61, which will be described below. The crankshaft supporting unit 30 also includes a reinforcing cross bar 35 extending between the respective side sections 31 and 32 in a rear bottom portion of the crankshaft supporting unit 30.

Plate members which have the same configuration are oppositely disposed to form the respective side sections 31 and 32. Both of a front end and a bottom end of each plate member extends generally straightly. Each rear end portion of the bottom end has a small projection 31 a and 32a extending downward. The reinforcing cross bar 35 is fixed adjacent to the projections 31 a and 32a. A lower rear end portion of each side section 31 and 32 has a projection 31 b and 32b extending rearward. An upper rear end portion thereof is recessed with a curved line relative to the lower rear end portion. A mounting piece 36 extends between upper portions of the respective projections 31 b and 32b and also extends obliquely downward rearward. The mounting piece 36 tapers rearward. A rear-most end of the mounting piece 36 has an opening 36a extending top to bottom.

A top front portion of each side section 31 and 32 has a semi circular recessed portion to which the cylindrical holder 34 is fixed, while a top rear portion thereof has a support piece 31c and 32c extending obliquely rearward upward. A spring hooking pin 37 extends from an outer surface of a rear potion of the side section 32. Each side section 31 and 32 has openings 38a and 38b at the projection 31 b and 32b and an upper and slightly rear portion. Each side section 31 and 32 also has three openings other than the openings 38a and 38b. The front section 33 has an oblong rectangular shape. A lower portion of the front section 33 has a fixing part 33a to which the rear end portion of the down tube 22 is fixed, while an upper portion of the front section 33 has a circular opening 33b.

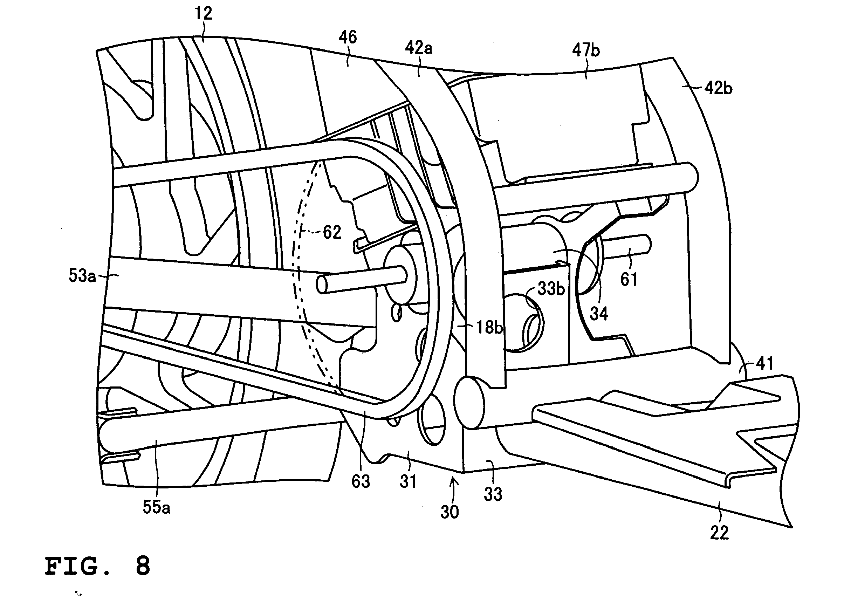

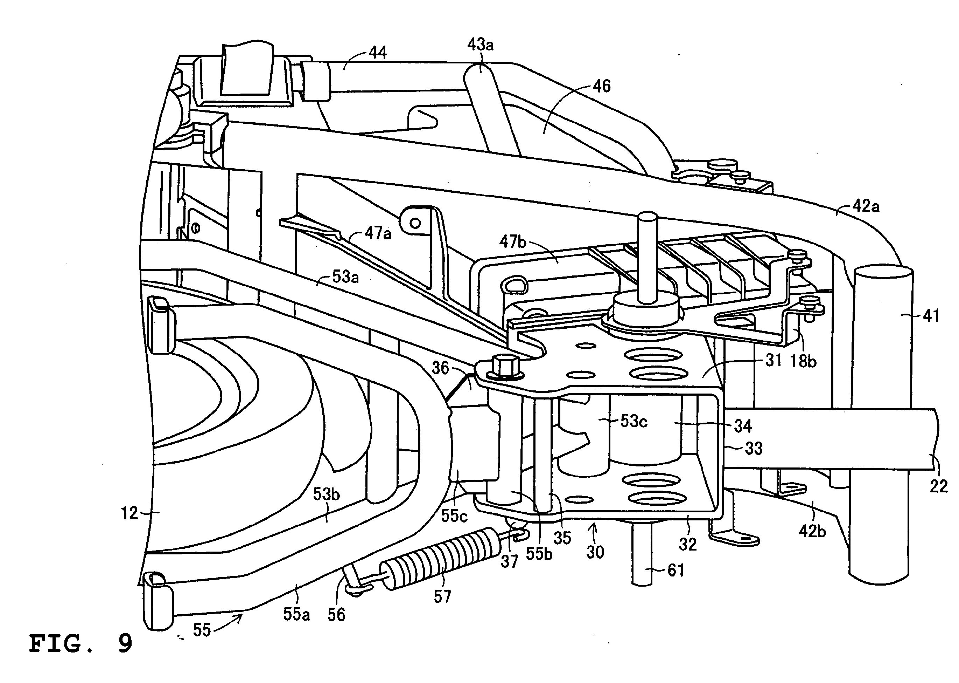

As shown in FIGs. 8 and 9, a short cross bar 41 extends horizontally and over the rear end portion of the down tube 22 to cross the axis of the down tube 22 at right angles and is fixed. A pair of rear frame members 42a and 42b is coupled with respective ends of the cross bar 41 and extends upward rearward in the rear cover unit 16. The respective rear frame members 42a and 42b are spaced apart from each other. A coupling plate 42c couples rear ends of the respective rear frame members 42a and 42b with each other.

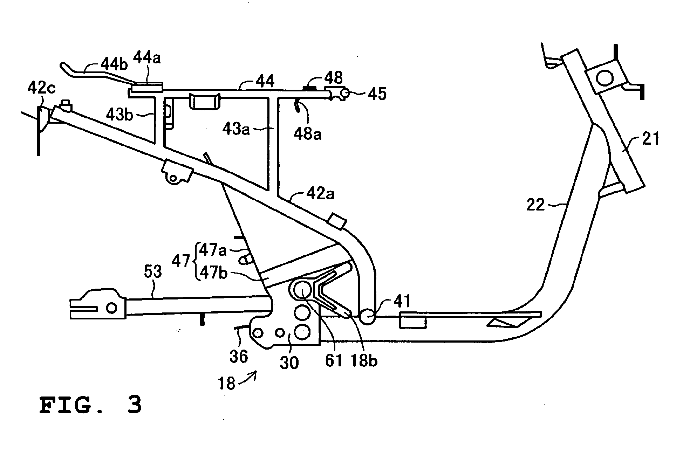

Mounting pipes 43a and 43b having different lengths are spaced apart from each other and are connected to top surfaces of the respective rear frame members 42a and 42b (see FIG. 3). Respective top ends of the mounting pipes 43a and 43b are leveled with each other, and a seat rail 44 is coupled with the top ends thereof. The seat rail 44 in a top plan view forms a U-shape. The seat rail 44 is attached to the top ends of the mounting pipes 43a and 43b in such a manner that the bottom of the U-shape of the seat rail 44 is oriented forward of the electric bicycle 10.

Distal ends of an auxiliary seat rail 44b which forms a U-shape in the top plan view are coupled with respective rear ends of the seat rail 44 through a coupling member 44a. Thus, the seat rail 44 and the auxiliary seat rail 44b together generally form an elliptic frame which elongates in the fore to aft direction. One of hinge couplings 45 is fixed to a front end of the seat rail 44 so that the seat 17 is hinged to the seat rail 44.

A battery container 47 is attached to a lower portion of the frame between the rear frame members 42a and 42b to support a battery 46. The battery container 47 inclines so that its bottom is positioned more forward than its top. The battery container 47 includes an inclining guide section 47a and a battery bottom receiving section 47b. The battery bottom receiving section 47b is formed with a low profile boxy member positioned at a bottom end of the inclining guide section 47a. The support pieces 31c and 32c of the crankshaft supporting unit 30 support the battery bottom receiving section 47b.

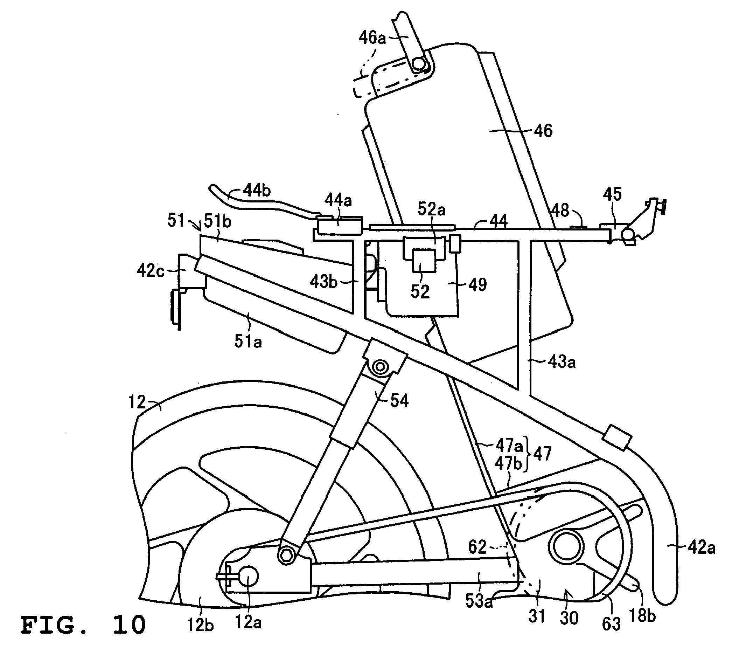

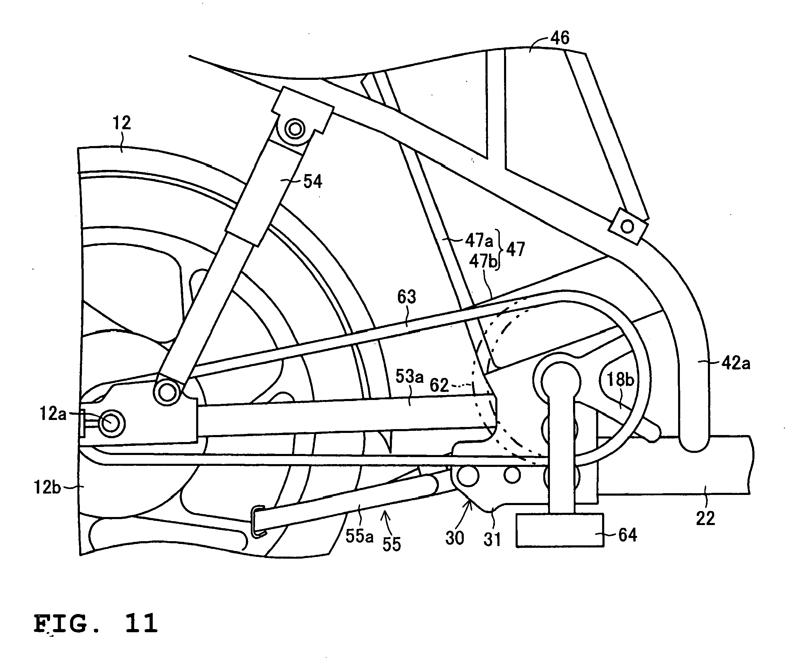

A support member 48 extends between respective front end portions of the seat rail 44. A stopper 48a is suspended from a center bottom of the support member to contact with a front top portion of the battery 46. The stopper 48a and the inclining guide section 47a together prevent the battery 46 from swinging fore to aft. As shown in FIG. 10, the battery 46 can slide obliquely downward from a top end of the inclining guide section 47a and along a surface of the guide section 47a to be contained in the battery container 47a. The battery 46 has a handle 47 at a top thereof. The handle 46a is pivotable between one position at which the handle extends along a top periphery of the battery 46 and another position at which the handle 46a extends upward. When the rider or owner of the bicycle 10 needs to move the battery 46 out of the container 47, he or she pivots the handle 46a to the upward extending position and then takes the battery 46 out. When the rider or owner returns the battery 46 into the container 47, the battery 46 is held as shown in FIG. 11.

Under this condition, a bottom end portion of the battery 46 is placed in the interior of the battery bottom receiving section 47b so as to be prevented from moving both in the fore to aft direction and in the transverse direction. The inclining guide section 47a and the stopper 48a prevent a top portion of the battery 46 from moving in the fore to aft direction. In addition, the seat rail 44 has a support plate 49 at a position corresponding to the battery 46. The respective support plates 49 prevent the battery 46 from moving in the transverse direction.

A boxy container 51 is fixed to rear end portions of the respective rear frame members 42a and 42b. The container 51 includes a lower container section 51 a positioned lower than top surfaces of the respective rear frame members 42a and 42b and an upper container section 51 b positioned higher than the top surfaces of the respective rear frame members 42a and 42b. Lengths of the respective lower and upper container sections 51 a and 51 b are the same as each other. However, a width of the lower container section 51 a is shorter than a width of the upper container section 51b. The inclining guide section 47a separates the container 51 and the battery container 47 from each other. As shown in FIG. 1, the rear cover unit 16 covers the battery container 47, the container 51, the rear frame members 42a and 42b, the seat rail 44, and the like so that they are not seen from outside.

Another portion of the hinge couplings 45 is fixed to a front end portion of a bottom surface of the seat 17. The seat is pivotable about an axis of the hinge couplings 45. A lock mechanism (not shown) is attached to an upper center portion of the inclining guide section 47a and to a portion of a lower surface of the seat 17 opposing to the upper center portion of the inclining guide section 47a. The lock mechanism is set into a lock state when the seat 17 is pressed onto the seat rail 44. The lock mechanism is unlocked by a key. A bracket 52a is attached to the seat rail 44 at a portion placed out of the support plate 49 which is fixed to the seat rail 44. A charger connector 52 is attached to the bracket 52a. The connector 52 can be connected to the battery 46 disposed in the battery container 47 so as to charge the battery 46.

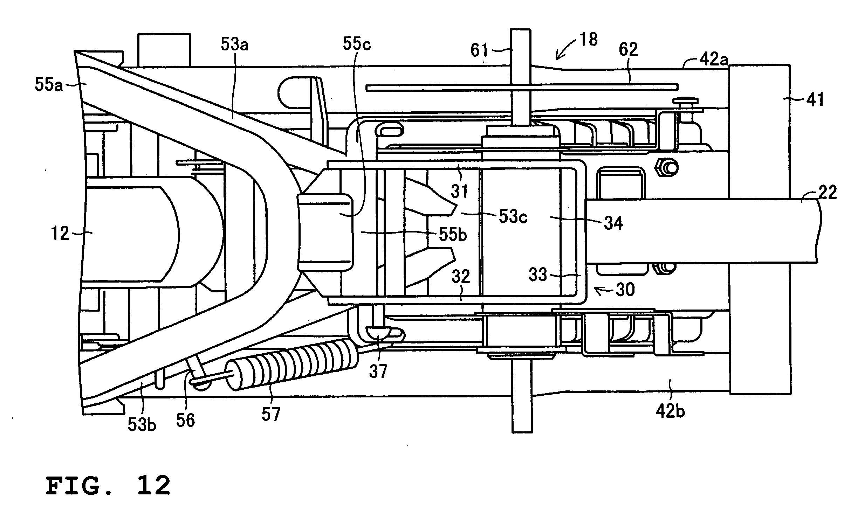

A rear arm 53 extending rearward is coupled with the crankshaft supporting unit 30 at the openings 38b. As shown in FIG. 12, the rear arm 53 has a pair of arm sections 53a and 53b. A coupling shaft 53c couples respective base portions (front end portions) of the arm sections 53a and 53b with each other. The respective base portions of the arms sections 53a and 53b are joined at portions of the coupling shaft 53c which are located side by side in an axial direction of the coupling shaft 53c so that the respective base portions extend normal to the axis of the coupling shaft 53c. Rear portions of the arm sections 53a and 53b extend outward and then extend parallel to each other in the rearward direction. The coupling shaft 53c extends between the side sections 31 and 32 of the crankshaft supporting unit 30 through the openings 38b.

Rear end portions of the respective arm sections 53a and 53b support both ends of an axle 12a of the rear wheel 12 for rotation. Thereby, the rear wheel 12 is rotatable about an axis of the axle 12a. Rear cushions 54 extend between rear upper portions of the respective arm sections 53a and 53b and generally center portions of the respective rear frame members 42a and 42b. The rear cushions 54 are telescopically movable to support the rear portions of the rear frame 53 for swing movement.

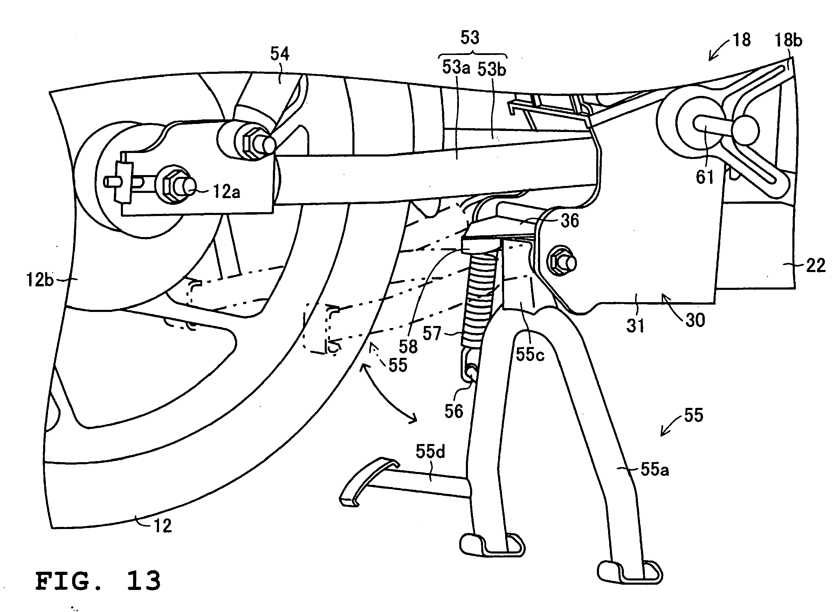

As shown in FIG. 13, a stand 55 is attached to the crank supporting unit 30 at the opening 38a for pivotal movement between a downward extending position and a generally horizontally extending position. The stand 55 includes a stand body having a pair of legs generally configured as the letter "U," a support shaft 55b attached to the crankshaft supporting unit 30, a coupling section 55c coupling a center portion (bending portion) of the stand body 55a and a center portion of the support shaft 55b in the transverse direction with each other, and a step section 55d positioned at a lower portion in an outer surface to extend outward from one of the legs of the stand body 55a.

The support shaft 55b extends between the openings 38a of the respective side sections 31 and 32 of the crankshaft supporting unit 30 to be attached thereto so that the stand 55 is pivotable. The rider steps on the step section 55d to move the stand 55 from the horizontally extending position to the downward extending position. A spring engage pin 56 is positioned at an upper portion in the outer surface on the one leg of the stand body 55a, while another spring engage pin 37 is positioned at a portion of the crankshaft supporting unit 30. A spring member 57 functioning as the resilient means of the present invention extends between the spring engage pins 56 and 37. The spring member 57 urges the stand 55 upward.

The reinforcing cross bar 35 of the crankshaft supporting unit 30 prevents the stand body 55a from further pivoting forward beyond the position indicated by the actual line of FIG. 13. Under the condition, the stand body 55a stays at the position so as to be standstill because the spring member 57 urges the stand 55 forward and upward. A stopper 58 is attached to the opening 36a positioned at a rear end portion in a lower surface of the mounting piece 36 by a screw. The stopper 58 prevents the stand body 55a from further pivoting upward beyond the position indicated by the chain double-dashed line of FIG. 13. The stopper 58 and the mounting piece 36 together form the preventing means of the present embodiment.

A sprocket 62 is fixed to the pedal crankshaft 61 of the pedal crank section 18. A chain 63 is wound around the sprocket 62 and another sprocket of the rear wheel 12. Thus, when the rider rotates the pedal 64 by the feet, the drive force of the rider (i.e., manpower) is transmitted from the pedal crank section 18 to the rear wheel 12 through the chain 63. As shown in FIG. 12, the sprocket 62 is attached so as to be positioned right under the rear frame member 42a. The rear frame member 42a thus protects the sprocket 62 and the chain 63. A cover 18a covers the pedal crank section 18. The cover 18a is attached to the side section 31 of the crankshaft supporting unit 30 via a bracket 18b welded to the side section 31 and having a screw hole.

A center portion of the rear wheel 12 has a transmission case 12b in which an electric motor 65 and a reduction gear unit are enclosed. A drum brake unit (not shown) is attached to a left side surface of the transmission case 12b. The electric motor 65 operates in accordance with an operational amount of the grip 24a under control of the controller to drive the rear wheel 12. The electric motor 65 stops its operation also under control of the controller when the brake levers 25a and 25b are operated. In addition, the front wheel 11 has a brake unit (not shown). This brake unit and the drum brake unit of the rear wheel 12 individually brake the associated front wheel 11 and rear wheel 12 in accordance with respective operational amounts of the brake levers 25a and 25b.

In the construction discussed above, when the rider uses the electric bicycle 10, the rider sits on the seat 17 and turns the power switch on. Then, the rider puts his or her feet on the respective pedals 64. If the rider desires to run the electric bicycle 10 on an uphill or the like using the drive force of the electric motor 65, the rider operates the grip 24a in accordance with a desirable acceleration speed. Thereby, the electric bicycle 10 runs under a stable condition such that the center of gravity is lowered. On this occasion, if the rider does not rotate the pedals 64 and just keeps the feet on the pedals 64, a one-way clutch disposed on the rear wheel 12 prevents the rotational force of the electric motor 65 from being transmitted to the pedals 64 through the chain 63.

On the other hand, the rider can rotate the pedals 64 while the electric motor 65 rotating. Thereby, the small force of the rider is boosted by the power of the electric motor 65 so that the electric bicycle 10 can run at a higher speed. If the rider desires to slow down the running speed of the electric bicycle 10, the rider operates the brake levers 25a and 25b to stop the operation of the electric motor 65 under control of the controller and then further operates the brake levers 25a and 25b so as to slow down the electric bicycle 10 in accordance with the operational amounts of the brake levers 25a and 25b. If the rider desires to run the electric bicycle 10 simply as a bicycle on a horizontal road, a down hill or the like, the rider rotates the pedals 64 with his or her own feet to power the rear wheel 12.

If the rider desires to slow down the electric bicycle 10, the rider operates the brake levers 25a and 25b in accordance with a magnitude of the desirable speed down. Thereby, the speed of the electric bicycle 10 reduces in response to the operational amounts of the brake levers 25a and 25b. In addition, when the rider desires to stop the electric bicycle 10, the rider turns the power switch off. Then, the rider pivots the stand 55 downward to make it contact with the ground; thereby, the electric bicycle is kept standing. In this operation, the rider pulls the electric bicycle 10 rearward while pivoting the stand body 55a downward by stepping on the step section 55d.

If the battery 46 is exhausted, the rider connects a connecting cable (not shown) for a charge operation to the connector 52 to charge the battery 46. In this charge operation, the rider unlocks the lock mechanism using a key and pivots the seat 17 upward. Then, the rider connects the connecting cable which is connected to the power source to the connector 52 so as to charge the battery 46. During charging, the seat 17 can be lowered to close the rear cover unit 16. Additionally, various articles can be contained in the rear container 51 in the interior of the rear cover unit 16.

As thus discussed, in this electric bicycle 10 according to the present embodiment, the support pieces 31c and 32c of the crankshaft supporting unit 30 together support the battery bottom receiving unit 47b which holds the lower end portion of the battery 46. The battery 46 thus can be positioned adjacent to the pedal crankshaft 61. Thereby, the battery 46 can be placed at the lowermost position in the center of the body 10a in the fore to aft direction. The center of gravity of the electric bicycle thus can be sufficiently lowered. In addition, because the battery bottom receiving section 47b is directly disposed in the upper portion of the crankshaft supporting unit 30, the parts counts can be small, and the arrangement of the parts can be compact.

Also, in the electric bicycle 10 according to the present embodiment, both of the rear end portion of the down tube 22 and the front end portion of the rear arm 53 are coupled with the crankshaft supporting unit 30. The crankshaft supporting unit 30 thus can be rigidly fixed, and certainly hold the battery 46. The crankshaft supporting unit 30 is formed with the U-shaped member in the plan view having the pair of side sections 31 and 32 and the front section 33 connecting the side sections 31 and 32 to each other. The both of the side sections 31 and 32 support the pedal crankshaft 61 while the respective ends of the pedal crankshaft 61 extending through the side sections 31 and 32. In addition, all the cylindrical holder 34, the reinforcing cross bar 35, the mounting piece 36, the coupling shaft 53c of the rear arm 53 and the support shaft 55b of the stand 55 extend between the side sections 31 and 32. Therefore, even though the crankshaft supporting unit 30 is relatively light in weight, the supporting unit 30 can rigidly support the battery 46.

The rear frame members 42a are bent to extend rearward to cover the front and top circumferential surfaces of the sprocket 62 with a certain space kept therebetween. The rear frame members 42a thus can protect the sprocket 62. Because the rear frame members 42a and 42b are positioned on both sides of the battery 46, the rear frame members 42a and 42b can protect the battery 46. In addition, the coupling shaft 53c of the rear arm 53 and the support shaft 55b of the stand 55 extend between the side sections 31 and 32 of the crankshaft supporting unit 30 so that one of them is positioned above the other. Therefore, the rear arm 53 and the stand 55 can be compactly attached for swing movement without interfering with each other.

The present electric bicycle is not limited to the embodiment discussed above and can be properly modified. For example, although the electric motor 65 is placed at the rear wheel 12, the electric motor 65 can be placed at the front wheel 11 or other portions. However, in order to dispose the battery 46 closer to the pedal crankshaft 61 so as to compactly arrange them, the electric motor 65 is preferably spaced apart from the pedal crank section 18.

In the embodiment discussed above, the down tube 22 is the single member. However, the down tube 22 can be formed with two members. The stand 55 is not limited to have the pair of legs and can have one leg. In such an alternative, the support shaft can be attached to the side surface of the crankshaft supporting unit 30. Also, the configuration of the crankshaft supporting unit 30 is not limited to the embodiment discussed above, and can be any structure that can be coupled with the down tube 22 and the rear arm 53 and can support the battery 46.

The description above discloses (amongst others) an embodiment of an electric bicycle including a pedal crank section for inputting drive force, wherein pedal crank section has a pedal crankshaft and a crankshaft supporting unit for supporting the pedal crankshaft, an electric motor inputs drive force into either one of a front wheel and a rear wheel, a battery supplies electric power to the electric motor, the electric motor is disposed at a certain portion of the body of the electric bicycle spaced apart from the pedal crank section, and battery bottom receiving section for holding a bottom portion of the battery is positioned above the crankshaft supporting unit.

According to this embodiment, the crankshaft supporting unit which supports the pedal crankshaft directly supports the battery bottom receiving section which holds the battery. The battery thus can be positioned as close to the pedal crankshaft as possible. That is, the battery can be placed at the lowest position that the battery can take above the pedal crankshaft in the fore to aft direction of the body of the bicycle. Thereby, the center of gravity of the electric bicycle can be placed at its lower position, and the components and parts of the bicycle can be compactly arranged.

In accordance with another embodiment, a front end portion of a down tube is coupled with a head pipe holding a steering shaft, and a rear end portion of the down tube is coupled with the crankshaft supporting unit. Thereby, the crankshaft supporting unit is coupled with the down tube which forms the major frame of the body of the bicycle. The crankshaft supporting unit thus is rigidly fixed and can certainly support the battery. The electric bicycle may have one or more down tubes.

In accordance with a further embodiment, a sprocket for driving the rear wheel through a chain is coupled with one end portion of the pedal crankshaft extending outward from a lateral side surface of the crankshaft supporting unit, a right and left pair of rear frame member extending obliquely rearward downward is coupled with the rear end portion of the down tube, and one of the pair of rear frame members bends to extend rearward so as to cover front and top circumferential surfaces of the sprocket. As thus constructed, the rear frame member covers the sprocket in a top plan view of the electric bicycle. Also, the rear frame member is placed on a lateral side of the battery. The rear frame member thus does not protrude outward in a transverse direction of the body of the bicycle. The electric bicycle can be narrower in the transverse direction, accordingly. In addition, the rear frame member can protect the sprocket and the battery.

In accordance with a further embodiment, the down tube is formed with a single member placed at a center portion in a transverse direction of the body, a cross member extending generally horizontally is fixed to a rear section of the down tube so as to cross at right angles with a longitudinal axis of the down tube, and respective end portions of the pair of rear frame members are coupled with both end portions of the cross member. Because the right and left rear frame members are coupled with the single down tube, the structure of the bicycle can be simpler and the weight thereof can be lighter.

In accordance with a further embodiment, a front end portion of a rear arm for supporting the rear wheel is fixed to the crankshaft supporting unit. Because the crankshaft supporting unit is fixed to the rear arm, the rigid fixation thereof can be assured. The crankshaft supporting unit thus can certainly support the battery.

In accordance with a further embodiment, a stand is pivotable about an axis of a support shaft thereof between a position at which the stand keeps the body under a standing condition and a position at which the stand extends rearward, and the support shaft is attached to the crankshaft supporting unit. The bicycle, thus, can have either one bar stand or two bar stand having two bars extending separately from its base. Also, the support shaft can be positioned on one lateral side of the crankshaft supporting unit, or can extend in an inner area of the crankshaft supporting unit. If the support shaft extends in the inner area of the crankshaft supporting unit, the crankshaft supporting unit can be rigidly anchored by pivotally supporting the stand using the support shaft, and the battery can be certainly supported.

In accordance with a further embodiment, the crankshaft supporting unit is a member which is shaped like the letter U in its plan view and has a right and left pair of side sections and a front section connecting the side sections to each other, and respective end portions of the pedal crankshaft are supported by the respective side sections under a condition that the respective end portions of the pedal crankshaft extend through the respective side sections. Because the crankshaft supporting unit is the U-shaped member and its right and left pair of side sections supports respective ends of the pedal crank shaft, the crankshaft supporting unit can certainly support the pedal crankshaft, although the crankshaft supporting unit is light enough. If shaft portions of the rear arm and the stand, other than the pedal crankshaft, extend between the respective side sections of the crankshaft supporting unit and are fixed thereto, the rigidity of the crankshaft supporting unit can be further improved.

In accordance with a further embodiment, the rear end portion of the down tube is coupled with the front section of the crankshaft supporting unit under a condition that the longitudinal axis of the down tube crosses the front section. Thereby, the down tube can be rigidly coupled with the crankshaft supporting unit with such a simple structure. Preferably, the longitudinal axis of the down tube crosses the front section of the crankshaft supporting unit at right angles.

In accordance with a further embodiment, the rear arm is formed with a right and left arm sections and a connecting shaft for connecting respective front end portions of the arm sections to each other, the connecting shaft extends between the right and left pair of the side sections, and the pair of the side sections support the connecting shaft of the rear arm so that a rear end portion of the rear arm is swingable. By journaling the connecting shaft of the rear arm, the crankshaft supporting unit can be rigid and can certainly support the battery. Because the crankshaft supporting unit is the U-shaped member, and the right and left pair of the side sections journal the connecting shaft of the rear arm, the crankshaft supporting unit can certainly support the rear arm, although the crankshaft supporting unit is light enough.

In accordance with a further embodiment, the pair of the side sections of the crankshaft supporting unit pivotally holds the support shaft of the stand therebetween, which is pivotable about the axis of the support shaft thereof between the position at which the stand keeps the body under the standing condition and the position at which the stand extends rearward, so that a distal end portion of the stand is swingable. Because pivotally holding the support shaft of the stand, the crankshaft supporting unit can be rigidly anchored and can certainly support the battery. Also, because the crankshaft supporting unit is the U-shaped member and the right and left pair of the respective side sections pivotally holds the stand, the crankshaft supporting unit certainly support the stand, although the crankshaft supporting unit is light enough.

In accordance with a further embodiment, the support shaft of the stand is positioned below respective portions of the right and left side sections of the crankshaft supporting unit to which the connecting shaft of the rear arm extending therebetween is attached, and the support shaft of the stand extends along the connecting shaft of the rear arm above or below the connecting shaft of the rear arm. Thereby, the rear arm and the stand can be compactly attached to the bicycle for swing movement without making them interference with each other.

In accordance with a further embodiment, a resilient means is disposed for urging the stand toward the position at which the stand extends rearward, and the right and left pair of side sections of the crankshaft supporting unit has a preventing means extending therebetween to prevent the stand from further pivoting beyond the position at which the stand extends rearward. Because having the preventing means, the crankshaft supporting unit can be rigid and can certainly support the battery.

The description above discloses in order to provide an electric bicycle which has the center of gravity placed at a lower position and has components and parts compactly arranged, an embodiment of an electric bicycle, wherein a rear wheel 12 of an electric bicycle 10 has an electric motor 65, an upper portion of a crankshaft supporting unit 30 has a battery bottom receiving unit 47b for supporting a bottom of a battery 46, a rear end portion of a down tube 22 and a front end portion of a rear arm 53 for supporting the rear wheel 12 are coupled with the crankshaft supporting unit 30, the crankshaft supporting unit 30 is a U-shaped member including side sections 31 and 32 and a front section 33 connecting the side sections 31 and 32, the side sections 31 and 32 support respective ends of a pedal crankshaft 61, and a support shaft 55b of the stand 55, a connecting shaft 53c of a rear arm 53 and a mounting piece 36 all extend between the side sections 31 and 32.

The description discloses according to a preferred first aspect an electric bicycle comprising: a pedal crank section for inputting drive force, the pedal crank section having a pedal crankshaft and a crankshaft supporting unit for supporting the pedal crankshaft; an electric motor for inputting drive force into either one of a front wheel and a rear wheel; and a battery for supplying electric power to the electric motor, wherein the electric motor is disposed at a predetermined portion of the body of the electric bicycle spaced apart from the pedal crank section, and a battery bottom receiving section for holding a bottom portion of the battery is positioned above the crankshaft supporting unit.

As a preferred second aspect, a front end portion of a down tube is coupled with a head pipe holding a steering shaft, and a rear end portion of the down tube is coupled with the crankshaft supporting unit.

As a preferred third aspect, a sprocket for driving the rear wheel through a chain is coupled with one end portion of the pedal crankshaft extending outward from a lateral side surface of the crankshaft supporting unit, a right and left pair of rear frame member extending obliquely rearward downward is coupled with the rear end portion of the down tube, and one of the pair of rear frame members bend to extend rearward so as to cover front and top circumferential surfaces of the sprocket.

As a preferred fourth aspect, the down tube is formed with a single member placed at a center portion in a transverse direction of the body, a cross member extending generally horizontally is fixed to a rear section of the down tube so as to cross at right angles with a longitudinal axis of the down tube, and respective end portions of the pair of rear frame members are coupled with both end portions of the cross member.

As a preferred fifth aspect, a front end portion of a rear arm for supporting the rear wheel is fixed to the crankshaft supporting unit.

As a preferred sixth aspect, a stand is pivotable about an axis of a support shaft thereof between a position at which the stand keeps the body under a standing condition and a position at which the stand extends rearward, the support shaft is attached to the crankshaft supporting unit.

As a preferred seventh aspect, the crankshaft supporting unit is a member which is shaped like the letter U in its plan view and has a right and left pair of side sections and a front section for connecting the side sections to each other, and respective end portions of the pedal crankshaft are supported by the respective side sections under a condition that the respective end portions of the pedal crankshaft extend through the respective side sections.

As a preferred eight aspect, the rear end portion of the down tube is coupled with the front section of the crankshaft supporting unit under a condition that the longitudinal axis of the down tube crosses with the front section.

As a preferred ninth aspect, the rear arm is formed with a right and left arm sections and a connecting shaft for connecting respective front end portions of the arm sections to each other, the connecting shaft extends between the right and left pair of the side sections, and the pair of the side sections support the connecting shaft of the rear arm so that a rear end portion of the rear arm is swingable.

As a preferred tenth aspect, the pair of the side sections of the crankshaft supporting unit pivotally holds the support shaft of the stand therebetween, which is pivotable about the axis of the support shaft thereof between the position at which the stand keeps the body under the standing condition and the position at which the stand extends rearward, so that the stand is swingable.

As a preferred eleventh aspect, the support shaft of the stand is positioned below respective portions of the right and left side sections of the crankshaft supporting unit to which the connecting shaft of the rear arm extending therebetween is attached, and the support shaft of the stand extends along the connecting shaft of the rear arm above or below the connecting shaft of the rear arm.

As a preferred twelfth aspect, a resilient means is disposed for urging the stand toward the position at which the stand extends rearward, and the right and left pair of side sections has a preventing means extending therebetween to prevent the stand from further pivoting beyond the position at which the stand extends rearward.

## Claims

1. Electric bicycle comprising an electric motor for inputting drive force into a wheel, a battery for supplying electric power to the electric motor, and a pedal crank section for inputting a drive force having a pedal crankshaft, and a crankshaft supporting unit, which directly supports a battery bottom receiving section holding the battery.

2. Electric bicycle according to claim 1, wherein the battery bottom receiving section for holding a bottom portion of the battery is positioned above the crankshaft supporting unit of the pedal crank section.

3. Electric bicycle according to claim 1 or 2 comprising the electric motor for inputting drive force into either one of a front wheel and a rear wheel, wherein the electric motor is disposed at a predetermined portion of the body of the electric bicycle spaced apart from the pedal crank section.

4. Electric bicycle according to one of the claims 1 to 3, wherein a front end portion of a down tube is coupled with a head pipe holding a steering shaft, and a rear end portion of the down tube is coupled with the crankshaft supporting unit.

5. Electric bicycle according to claim 4, wherein a sprocket for driving the rear wheel through a chain is coupled with one end portion of the pedal crankshaft extending outward from a lateral side surface of the crankshaft supporting unit, a right and left pair of rear frame member extending obliquely rearward downward is coupled with the rear end portion of the down tube, and one of the pair of rear frame members bend to extend rearward so as to cover front and top circumferential surfaces of the sprocket.

6. Electric bicycle according to claim 5, wherein the down tube is formed with a single member placed at a center portion in a transverse direction of the body, a cross member extending generally horizontally is fixed to a rear section of the down tube so as to cross at right angles with a longitudinal axis of the down tube, and respective end portions of the pair of rear frame members are coupled with both end portions of the cross member.

7. Electric bicycle according to one of the claims 1 to 6, wherein a front end portion of a rear arm for supporting the rear wheel is fixed to the crankshaft supporting unit.

8. Electric bicycle according to one of the claims 1 to 7, wherein a stand is pivotable about an axis of a support shaft thereof between a position at which the stand keeps the body under a standing condition and a position at which the stand extends rearward, the support shaft being attached to the crankshaft supporting unit.

9. Electric bicycle according to one of the claims 1 to 8, wherein the crankshaft supporting unit is a member, which is shaped like the letter U in its plan view and has a right and left pair of side sections and a front section for connecting the side sections to each other, and respective end portions of the pedal crankshaft are supported by the respective side sections under a condition that the respective end portions of the pedal crankshaft extend through the respective side sections.

10. Electric bicycle according to claim 9, wherein the rear end portion of the down tube is coupled with the front section of the crankshaft supporting unit under a condition that the longitudinal axis of the down tube crosses with the front section.

11. Electric bicycle according to claim 9 or 10, wherein the rear arm is formed with a right and left arm sections and a connecting shaft for connecting respective front end portions of the arm sections to each other, said connecting shaft extending between the right and left pair of the side sections, and the pair of the side sections supporting the connecting shaft of the rear arm so that a rear end portion of the rear arm is swingable.

12. Electric bicycle according to one of the claims 9 to 11, wherein the pair of the side sections of the crankshaft supporting unit pivotally holds the support shaft of the stand therebetween, which is pivotable about the axis of the support shaft thereof between the position at which the stand keeps the body under the standing condition and the position at which the stand extends rearward, so that the stand is swingable.

13. Electric bicycle according to claim 12, wherein the support shaft of the stand is positioned below respective portions of the right and left side sections of the crankshaft supporting unit to which the connecting shaft of the rear arm extending therebetween is attached, and the support shaft of the stand extends along the connecting shaft of the rear arm above or below the connecting shaft of the rear arm.

14. Electric bicycle according to claim 12 or 13, wherein a resilient means is disposed for urging the stand toward the position at which the stand extends rearward, and the right and left pair of side sections has a preventing means extending therebetween to prevent the stand from further pivoting beyond the position at which the stand extends rearward.
